# DEMANDE DE BREVET EUROPEEN

(11) **EP 4 596 374 A1**
(43) Date de publication de la demande: **06.08.2025**
(21) Numéro de dépôt: 25155516.5
(22) Date de dépôt: 03.02.2025
(51) Int. Cl.: B62D 25/20

(54) **STRUCTURE RENFORCÉE DE VÉHICULE AUTOMOBILE**

(30) Priorité: 05.02.2024 FR 2401074
(71) Demandeur: Stellantis Auto SAS, 78300 Poissy (FR)
(72) Inventeur: BERTH, STEPHANE, 92320 CHATILLON (FR)
(74) Mandataire: BCIP

(57) **Abrégé**

L'invention concerne une structure (1) de véhicule présentant un plancher (2) s'étendant entre une face supérieure (3) et une face inférieure (4) et comprenant une première traverse (5) s'étendant sur la face supérieure (3) suivant une direction transversale de la structure (1), la première traverse (5) formant un profilé (6) présentant une feuillure (7) arrière, en appui sur la face supérieure (3), entre la première traverse (5) et une extrémité arrière, suivant l'axe longitudinal, la structure (1) comprenant au moins un élément de renfort (8) rapporté sur la structure (1) et fixé sur la face inférieure (4), au droit de la feuillure (7) arrière et, d'autre part, sur un élément de rigidification (9) disposé entre l'extrémité avant et la feuillure (7) suivant l'axe longitudinal, chaque élément de renfort (8) étant conçu pour s'opposer à la déformation de la première traverse (5) en cas de choc avant.

## Description

Le domaine technique concerne les structures de véhicules automobiles comportant un renforcement, ainsi que les véhicules automobiles équipés d'une telle structure.

En matière de sécurité routière, les constructeurs d'automobiles doivent prendre en compte de multiples préoccupations et réglementations lors du développement de nouveaux véhicules. Ainsi, les constructeurs d'automobiles doivent assurer la sécurité des passagers du véhicule en cas de collision. Afin de garantir la sécurité des passagers, les véhicules sont soumis à diverses procédures normalisées de simulations de chocs contre un obstacle rigide impactant le véhicule.

Les procédures normalisées sont, par exemple, décrites par l'administration nationale américaine de la sécurité routière (NHTSA), qui est responsable de la sécurité routière et de la réglementation des véhicules.

Le comportement des véhicules automobiles dans ces situations est réglementé et testé et les exigences en termes de résultats à ces tests sont toujours plus nombreuses, plus difficiles à satisfaire et obligent les constructeurs d'automobiles à innover constamment.

Par ailleurs, le développement récent des véhicules électriques impose de nouvelles contraintes, comme, par exemple, l'ajout de renfort longitudinaux et la nécessiter de préserver les batteries de motorisation des déformations et des impacts.

Dans ce contexte et de manière générale, de nombreux véhicules comportent une traverse d'assise fixée à un plancher du véhicule. Il convient de préserver une telle traverse d'assise des déformations en cas de choc avant. Or, ces déformations sont d'autant plus facilitées que le véhicule présente des renforts longitudinaux s'étendant de l'avant du véhicule jusqu'à cette traverse d'assise. L'expérience montre, en effet, que les renforts longitudinaux transmettent une partie de l'énergie d'un choc avant à la traverse d'assise, qui subit alors un effort de torsion déformant le plancher du véhicule. Lorsque le véhicule est un véhicule à motorisation électrique, la déformation du plancher est susceptible d'impacter une batterie de motorisation disposée sous le plancher.

Ainsi, il existe un besoin d'une solution permettant de protéger une traverse de déformation par torsion lors d'un choc avant.

La présente invention a pour objet de pallier les problèmes exposés précédemment. Dans ce contexte technique, un but de la présente invention est de fournir une structure de véhicule qui, en cas de choc avant, limite les déformations par torsion d'une traverse solidaire du plancher.

A cet effet, la présente invention se rapporte à une structure de véhicule automobile présentant un plancher s'étendant entre une face supérieure et une face inférieure, la structure comprenant une première traverse s'étendant sur la face supérieure du plancher et suivant une direction transversale de la structure du véhicule, la première traverse formant un profilé présentant au moins une feuillure arrière, au moins en partie en appui sur la face supérieure du plancher, entre la première traverse et une extrémité arrière de la structure, suivant un axe longitudinal de la structure, la structure comprenant en outre au moins un élément de renfort rapporté sur la structure et fixé, d'une part, sur la face inférieure du plancher, au moins en partie au droit de la feuillure arrière et, d'autre part, sur un élément de rigidification de la structure disposé entre l'extrémité avant de la structure et la feuillure suivant l'axe longitudinal de la structure, chaque élément de renfort étant conçu pour s'opposer à la déformation de la première traverse en cas de choc avant subi par la structure.

L'invention concerne également un véhicule automobile présentant une structure selon l'invention.

Ainsi, la structure de véhicule selon l'invention présente une première traverse protégée des déformations par torsion en cas de choc avant. En effet, l'énergie du choc transmise à la première traverse impose des efforts à la feuillure arrière fixée au plancher. L'élément de renfort, disposé sur la face inférieure du plancher et au droit de la feuillure, s'oppose à la déformation du plancher par la feuillure arrière. En effet, l'élément de renfort permet de transmettre les efforts à l'élément de rigidification en s'opposant à la déformation de la première traverse et du plancher, auquel la première traverse est fixée. Ainsi, en cas de choc avant, l'élément de renfort s'oppose à la déformation du plancher habituellement provoquée par la feuillure arrière et évite, le cas échéant, d'impacter une batterie de motorisation.

Selon un mode de réalisation de l'invention, la structure comporte au moins un renfort longitudinal s'étendant sur la face supérieure du plancher entre l'extrémité avant et la première traverse, chaque élément de renfort étant disposé dans le prolongement d'un renfort longitudinal.

Selon une possibilité, l'élément de rigidification est une deuxième traverse s'étendant sur la face inférieure du plancher.

Avantageusement, la deuxième traverse est conçue pour permettre la fixation d'une batterie de motorisation.

Dans un mode de réalisation, l'élément de renfort est formé d'une tôle emboutie en forme d'équerre.

Avantageusement, la tôle emboutie comporte au moins une nervure permettant de renforcer la tôle emboutie.

Selon un mode de réalisation de la structure de véhicule, l'élément de renfort est rapporté sur la structure par soudure.

Avantageusement, la première traverse est une traverse d'assise.

Selon une possibilité, le véhicule est à motorisation électrique.

L'invention sera mieux comprise à la lecture de la description détaillée qui va suivre, donnée uniquement à titre d'exemple non limitatif et faite en se référant au dessin annexé sur lequel :

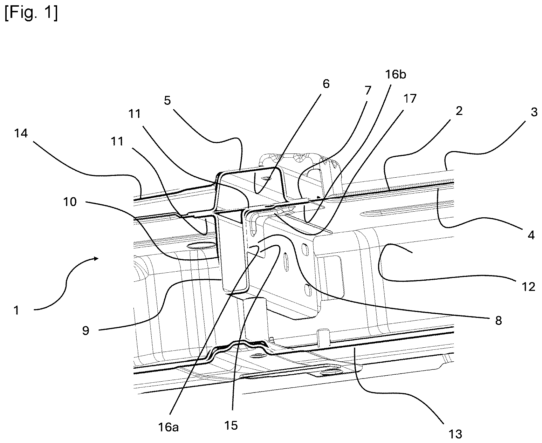

[Fig. 1] la figure 1 représente une vue en coupe longitudinale d'une structure de véhicule selon l'invention.

Une structure 1 de véhicule automobile selon l'invention, illustrée partiellement sur la figure, est destinée à équiper un véhicule selon l'invention. Avantageusement, le véhicule selon l'invention est un véhicule à motorisation électrique.

La structure 1 présente un plancher 2 s'étendant entre deux faces opposées, une face supérieure 3 et une face inférieure 4. La face supérieure 3 est destinée à faire face à l'habitacle du véhicule. La structure 1 s'étend longitudinalement entre une extrémité avant (non illustrée), participant à la partie communément appelée avant du véhicule, et une extrémité arrière (non illustrée), disposée dans la partie communément appelée arrière du véhicule.

La structure 1 comprend une première traverse 5 qui s'étend sur la face supérieure 3 du plancher 2, suivant une direction transversale de la structure 1 du véhicule. La première traverse 5 forme un profilé 6 présentant au moins une feuillure 7 arrière. La feuillure 7 arrière est au moins en partie en appui sur la face supérieure 3 du plancher 2. La feuillure 7 arrière est, par exemple, soudée au plancher 2. La feuillure 7 arrière est disposée entre la première traverse 5 et l'extrémité arrière de la structure 1, suivant un axe longitudinal de la structure 1.

Dans l'exemple illustré sur la figure 1, la première traverse 5 est une traverse d'assise.

La structure 1 comprend en outre au moins un élément de renfort 8 rapporté sur la structure 1 et fixé, d'une part, sur la face inférieure 4 du plancher 2, au moins en partie au droit de la feuillure 7 arrière et, d'autre part, sur un élément de rigidification 9 de la structure 1 disposé entre l'extrémité avant de la structure 1 et la feuillure 7 suivant l'axe longitudinal de la structure 1. L'élément de rigidification 9 est typiquement une partie participant à la résistance structurelle de la structure 1. En étant fixé au moins en partie au droit de la feuillure 7, il existe ainsi une zone du plancher 2 présentant au moins trois épaisseurs de tôle comprenant la feuillure 7, le plancher 2 et l'élément de renfort 8.

Dans le mode de réalisation illustré sur la figure, l'élément de renfort 8 est rapporté sur la structure 1 par soudure.

Chaque élément de renfort 8 est conçu pour s'opposer à la déformation de la première traverse 5 en cas de choc avant subi par la structure 1.

Dans l'exemple illustré sur la figure, l'élément de rigidification 9 est une deuxième traverse 10 s'étendant sur la face inférieure 4 du plancher 2. La deuxième traverse 10 forme un profilé en U prolongée par deux rebords 11 en appui sur la face inférieure 4. Cette deuxième traverse 10 présente des dimensions, notamment une épaisseur, importantes pour lui conférer une rigidité importante afin de minimiser ses déformations en cas de choc avant subi par la structure 1. La deuxième traverse 10 est, par exemple, soudée à des parties latérales 12 de la structure 1, telles que des longerons. Avantageusement, la deuxième traverse 10 est conçue pour permettre la fixation d'un bac 13 conçu pour recevoir une batterie de motorisation, non illustrée.

Comme illustré sur la figure, la structure 1 comporte au moins un renfort longitudinal 14, partiellement illustré, s'étendant suivant l'axe longitudinal sur la face supérieure 3 du plancher 2 entre l'extrémité avant et la première traverse 5. Lors d'un choc avant subi par la structure 1, chaque renfort longitudinal 14 transmet une partie de l'énergie du choc à la première traverse 5. Aussi, avantageusement, chaque élément de renfort 8 est disposé dans le prolongement d'un renfort longitudinal 14.

Comme illustré sur la figure, l'élément de renfort 8 est formé d'une tôle emboutie 15 en forme d'équerre. Ainsi, l'élément de renfort 8 présente deux parties 16a, 16b formant un angle sensiblement droit. Une partie 16a de l'élément de renfort 8 est fixée en appui de la deuxième traverse 10 et l'autre partie 16b est fixée en appui du plancher 2, au droit de la feuillure 7.

Avantageusement, la tôle emboutie 15 comporte au moins une nervure 17, en l'occurrence deux nervures 17, permettant de la renforcer.

Ainsi, la structure 1 présente une première traverse 5 protégée des déformations par torsion en cas de choc avant. En effet, l'énergie du choc transmise à la première traverse 5, en particulier par les renforts longitudinaux 14, impose des efforts à la feuillure 7 arrière fixée au plancher 2. L'élément de renfort 8, disposé sur la face inférieure 4 du plancher 2 et au droit de la feuillure 7, s'oppose à la déformation du plancher 2 par la feuillure 7 arrière. En effet, au droit de la feuillure 7, au moins trois épaisseurs de tôle sont soudées ensemble : la feuillure 7, le plancher 2 et la partie 16b de l'élément de renfort 8. L'élément de renfort 8 permet donc de transmettre les efforts à la deuxième traverse 10 en s'opposant à la déformation de la première traverse 5 et du plancher 2.

L'invention ne se limite pas au mode de réalisation de la structure de véhicule automobile décrit ci-avant, seulement à titre d'exemple, mais d'autres modes de réalisation peuvent être conçus par l'homme de métier sans sortir du cadre et de la portée de la présente invention.

## Revendications

1. Structure (1) de véhicule automobile présentant un plancher (2) s'étendant entre une face supérieure (3) et une face inférieure (4), la structure (1) comprenant une première traverse (5) s'étendant sur la face supérieure (3) du plancher (2) et suivant une direction transversale de la structure (1) du véhicule, la première traverse (5) formant un profilé (6) présentant au moins une feuillure (7) arrière, au moins en partie en appui sur la face supérieure (3) du plancher (2), entre la première traverse (5) et une extrémité arrière de la structure (1), suivant un axe longitudinal de la structure (1), la structure (1) comprenant en outre au moins un élément de renfort (8) rapporté sur la structure (1) et fixé, d'une part, sur la face inférieure (4) du plancher (1), au moins en partie au droit de la feuillure (7) arrière et, d'autre part, sur un élément de rigidification (9) de la structure (1) disposé entre l'extrémité avant de la structure (1) et la feuillure (7) suivant l'axe longitudinal de la structure (1), chaque élément de renfort (8) étant conçu pour s'opposer à la déformation de la première traverse (5) en cas de choc avant subi par la structure (1).

2. Structure (1) de véhicule selon la revendication 1, **caractérisée en ce qu'**elle comporte au moins un renfort longitudinal (14) s'étendant sur la face supérieure (3) du plancher (2) entre l'extrémité avant et la première traverse (5), chaque élément de renfort (8) étant disposé dans le prolongement d'un renfort longitudinal (14).

3. Structure (1) de véhicule selon la revendication 1 ou 2, **caractérisée en ce que** l'élément de rigidification (9) est une deuxième traverse (10) s'étendant sur la face inférieure (4) du plancher (2).

4. Structure (1) de véhicule selon la revendication 3, **caractérisée en ce que** la deuxième traverse (10) est conçue pour permettre la fixation d'une batterie de motorisation.

5. Structure (1) de véhicule selon l'une des revendications 1 à 4, **caractérisée en ce que** l'élément de renfort (8) est formé d'une tôle emboutie (15) en forme d'équerre.

6. Structure (1) de véhicule selon la revendication 5, **caractérisée en ce que** la tôle emboutie (15) comporte au moins une nervure (17) permettant de renforcer la tôle emboutie (15).

7. Structure (1) de véhicule selon l'une des revendications 1 à 6, **caractérisée en ce que** l'élément de renfort (8) est rapporté sur la structure (1) par soudure.

8. Structure (1) de véhicule selon l'une des revendications 1 à 7, **caractérisée en ce que** la première traverse (5) est une traverse d'assise.

9. Véhicule automobile présentant une structure (1) selon l'une des revendications 1 à 8.

10. Véhicule automobile selon la revendication 9, **caractérisé en ce qu'**il est à motorisation électrique.
